# EUROPEAN PATENT APPLICATION

(11) **EP 4 650 402 A1**
(43) Date of publication of application: **19.11.2025**
(21) Application number: 25166828.1
(22) Date of filing: 27.03.2025
(51) Int. Cl.: C09D 5/08

(54) **CHROME-FREE CORROSION RESISTANT SOL-GEL CONVERSION COATINGS**

(30) Priority: 14.05.2024 US 202418663677
(71) Applicant: The Boeing Company, Arlington, VA 22202 (US)
(72) Inventor: KATTA, Pradeep Prem Kumar, Arlington, 22202 (US); SCHUETTE, Waynie Mark, Arlington, 22202 (US)
(74) Representative: Smart, Jessica Ann

(57) **Abstract**

A corrosion inhibitor coating composition is disclosed. The corrosion inhibitor coating composition includes a corrosion inhibitor such as 2,5-dimercapto 1,3,4-thiadiazole (DMCT), at least one reactive silane, and a catalyst. The reactive silane may include tetraethoxysilane (TEOS), vinyltriethoxysilane (VTS), 3-glycidoxypropyltrimethoxysilane (GPTMS), methyltrimethoxysilane (MTMS), or a combination thereof. The corrosion inhibitor coating composition does not include chromium. The catalyst may be zirconium isopropoxide or acetic acid. The corrosion inhibitor may also include a thiadiazole, a benzotriazole, an imidazole, or a combination thereof. An article and method of providing a corrosion inhibitor coating is also disclosed.

## Description

### TECHNICAL FIELD

The present teachings relate generally to chrome-free corrosion inhibition coatings and, more particularly, to chrome-free corrosion inhibition coatings including sol-gels.

### BACKGROUND

The use of chromium-containing corrosion inhibitors, also referred to as chromium conversion coatings has been widespread for decades because of its performance and durability with respect to the prevention of corrosion on steel, aluminum, and other alloys used in aerospace manufacturing. Recently, the use of chromium conversion coatings is being restricted by regulations on a global basis. New organic corrosion inhibitor molecules have been developed to replace the use of chromium for some applications. These organic corrosion inhibitor molecules require a reaction with a multi-functional resin to create a durable coating which contains these inhibitors. In some coatings, inhibitors can be directly added to or applied on the panels found in vehicles or aircraft. In such cases, the corrosion inhibitor will disperse within a coating but may not provide good bonding with substrate panels as well as primers or epoxy coatings previously applied to substrates or panels.

Therefore, cross-linkage can be required between the coating molecules and inhibitor within an inhibitor coating will take time to react. For example, some epoxy-based systems are not reactive enough with these organic-based corrosion inhibitor system molecules, and the reaction needed to cross-link does not proceed within the limits of possible application methods. In examples, high temperature and long reaction times are necessary to achieve full reaction to provide adequate coating properties and adhesion.

Thus, there is a need for providing corrosion inhibition compositions having facile reactions that proceed within acceptable process limitations, while affording acceptable or improved adhesion and corrosion inhibition. In particular, chromate conversion coatings are needed for non-chromate primer systems to meet adhesion promotion and corrosion resistance requirements close to metal surfaces.

### SUMMARY

The following presents a simplified summary in order to provide a basic understanding of some aspects of one or more embodiments of the present teachings. This summary is not an extensive overview, nor is it intended to identify key or critical elements of the present teachings, nor to delineate the scope of the disclosure. Rather, its primary purpose is merely to present one or more concepts in simplified form as a prelude to the detailed description presented later.

A corrosion inhibitor coating composition is disclosed. The corrosion inhibitor coating composition includes a corrosion inhibitor such as 2,5-dimercapto 1,3,4-thiadiazole (DMCT). The composition also includes at least one reactive silane and a catalyst. Implementations of the corrosion inhibitor coating composition include where the at least one reactive silane may include tetraethoxysilane (TEOS). The at least one reactive silane may include vinyltriethoxysilane (VTS), 3-glycidoxypropyltrimethoxysilane (GPTMS), methyltrimethoxysilane (MTMS), or a combination thereof. The corrosion inhibitor coating composition does not include chromium. The catalyst may include zirconium isopropoxide or acetic acid. The 2,5-dimercapto 1,3,4-thiadiazole (DMCT) is present in an amount of from about 0.1 % to about 5.0 % by total weight of the corrosion inhibitor coating composition. The at least one reactive silane may include a first reactive silane and a second reactive silane, and where a weight ratio of the first reactive silane to the second reactive silane is from about 0.5:1 to about 3:1. The corrosion inhibitor further may include a thiadiazole, a benzotriazole, an imidazole, or a combination thereof.

An article is disclosed. The article includes a substrate and a corrosion inhibitor coating composition disposed on a surface of the substrate, which may include 2,5-dimercapto 1,3,4-thiadiazole (DMCT), at least one reactive silane, and a catalyst, and where the at least one reactive silane may include tetraethoxysilane (TEOS), vinyltriethoxysilane (VTS), 3-glycidoxypropyltrimethoxysilane (GPTMS), or a combination thereof. Implementations of the article can include where the corrosion inhibitor coating composition does not include chromium. The catalyst may include zirconium isopropoxide or acetic acid. The 2,5-dimercapto 1,3,4-thiadiazole (DMCT) is present in an amount of from about 0.1 % to about 5.0 % by total weight of the corrosion inhibitor coating composition. A thickness of the corrosion inhibitor coating composition can be from about 100 nm to about 10 microns. The substrate may include a metal, polymer, polymer composite, or combination thereof. The article can include where no adhesive or primer is present between the substrate and the corrosion inhibitor coating composition. The article is a component or part of an aerospace vehicle or a marine vehicle.

A method of providing a corrosion inhibitor coating is disclosed, where the method includes forming a corrosion inhibitor coating composition having a 2,5-dimercapto 1,3,4-thiadiazole (DMCT), at least one reactive silane, a catalyst, and a solvent, applying the corrosion inhibitor coating composition to a surface of a substrate, and exposing the corrosion inhibitor coating composition to a curing temperature. Implementations of the method of preparing a corrosion inhibitor coating composition can include a thickness of the corrosion inhibitor coating composition as applied is from about 30 nm to about 10 microns, and the curing temperature is from about 15°C to about 150°C.

The features, functions, and advantages that have been discussed can be achieved independently in various implementations or can be combined in yet other implementations further details of which can be seen with reference to the following description.

### BRIEF DESCRIPTION OF THE DRAWINGS

The accompanying drawings, which are incorporated in and constitute a part of this specification, illustrate embodiments of the present teachings and together with the description, serve to explain the principles of the disclosure. In the figures:
FIG. 1A illustrates a schematic view of a vehicle, in accordance with the present disclosure.
FIG. 1B depicts an application of a structural component including a corrosion inhibition composition applied to an aerospace vehicle, in accordance with the present disclosure.
FIG. 1C is an exploded view of a structural component including a corrosion inhibition composition applied to an aerospace vehicle, in accordance with the present disclosure.
FIG. 1D is an additional cross-section schematic of an exemplary corrosion inhibition coating composition in the context of use, in accordance with the present disclosure.
FIGS. 2A-2C are photographs of exemplary coatings of Example 1 after coating, after 168 hours of a salt spray test, and after 336 hours of a salt spray test, respectively, in accordance with the present disclosure.
FIGS. 3A-3C are photographs of exemplary coatings of Example 2 after coating, after 168 hours of a salt spray test, and after 336 hours of a salt spray test, respectively, in accordance with the present disclosure.
FIGS. 4A-4C are photographs of exemplary coatings of Example 3 after coating, after 168 hours of a salt spray test, and after 336 hours of a salt spray test, respectively, in accordance with the present disclosure.
FIGS. 5A-5C are photographs of exemplary coatings of Example 4 after coating, after 168 hours of a salt spray test, and after 336 hours of a salt spray test, respectively, in accordance with the present disclosure.

It should be noted that some details of the figures have been simplified and are drawn to facilitate understanding of the present teachings rather than to maintain strict structural accuracy, detail, and scale.

### DETAILED DESCRIPTION

Reference will now be made in detail to exemplary embodiments of the present teachings, examples of which are illustrated in the accompanying drawings. Wherever possible, the same reference numbers will be used throughout the drawings to refer to the same, similar, or like parts.

As used herein, "free" or "substantially free" of a material can refer to a composition, component, or phase where the material is present in an amount of less than 10.0 weight %, less than 5.0 weight %, less than 3.0 weight %, less than 1.0 weight %, less than 0.1 weight %, less than 0.05 weight %, less than 0.01 weight %, less than 0.005 weight %, or less than 0.0001 weight % based on a total weight of the composition, component, or phase.

Additionally, all numerical values are "about" or "approximately" the indicated value, and take into account experimental error and variations that would be expected by a person having ordinary skill in the art. It should be appreciated that all numerical values and ranges disclosed herein are approximate values and ranges. The terms "about" or "substantial" and "substantially" or "approximately," with reference to amounts or measurement values, are meant that the recited characteristic, parameter, or values need not be achieved exactly. Rather, deviations or variations, including, for example, tolerances, measurement error, measurement accuracy limitations, and other factors known to those skilled in the art, may occur in amounts that do not preclude the effect that the characteristic was intended to provide. As used herein, "about" is to mean within +/-5% of a stated target value, maximum, or minimum value.

All references cited herein are hereby incorporated by reference in their entireties. In the event of a conflict in a definition in the present disclosure and that of a cited reference, the present disclosure controls.

Where the term 'comprises' or 'comprising' has been used, this also provides basis for the terms 'consists of, 'consisting of', 'consists essentially of' and 'consisting essentially of' throughout the specification.

In examples of the present disclosure, 2,5-Dimercapto 1,3,4-Thiadiazole (DMCT) is a corrosion inhibitor that can be used as an alternate for chromium inhibitor in sol-gel conversion coating compositions used as corrosion inhibition coatings. The present disclosure describes methods and formulations of sol-gel conversion coatings that improve corrosion resistance and promote adhesion by reducing the usage of environmental impact coatings in aircraft or marine programs. The approach of the present disclosure can reduce the steps involved in an outer coating process and minimize toxic effects that may be caused by chromium. The developed sol-gel conversion coatings have been tested for pot-life with DMCT and evaluated for corrosion resistance performance in salt spray test as per ASTM B117, which will be described in further detail later.

The sol-gel based corrosion inhibition composition can be applied as a thin film on cleaned aluminum alloy (AA 2024) panels and cured at room temperature. The developed coatings are transparent and qualified for 336 hours of salt spray test as per ASTM B117 standard on AA 2024 panels. Electrochemical analysis can also be used to measure the corrosion inhibition efficiency of synthesized sol-gel coatings on AA 2024 alloys, and water contact angle measurement can be used to analyze hydrophobicity of the sol-gel based corrosion inhibition coating compositions.

Sol-gel coating formulations can be synthesized using tetraethylorthosilicate (TEOS), vinyltriethoxysilane (VTS) and 3-glycidoxypropyltrimethoxysilane (GPTMS), methyltrimethoxysilane (MTMS), acetic acid, zirconium isopropoxide, DMCT, as well as other ingredients of similar types. The pot life of the corrosion resistant coating compositions of the present disclosure can be evaluated based on the sedimentation of DMCT particles dispersed within the corrosion inhibition coating composition. In exemplary examples, it was observed that the DMCT particles in Part B solutions were not dissolved but completely dispersed in the solution, and no precipitation or sedimentation was observed. The color of the solutions or coating dispersions turned a yellow color. In examples, after addition of part-A to part-B compositions, the color of the solution remains the same. Also, after 30 min, the particles in some examples, started settling at the bottom due to gravitational force. But once the solution is mixed under stirring the particles are uniformly distributed and color intensity remains.

The developed sol-gel conversion coatings resulting in the present corrosion inhibition coatings remain transparent and have been qualified for 336 hours of salt spray test as per ASTM B117 standard on AA 2024 panels. No corrosion products observed on the surface of corrosion resistant coated AA 2024 panels after 168 hours and 336 hours of salt spray exposure. The use of DMCT can impact the transparency and appearance of such sol-gel conversion coatings on aluminum alloys while still providing corrosion resistance without the need for chromium inhibitors. However, it may also result in a slightly yellowish color due to the presence of these DMCT particles.

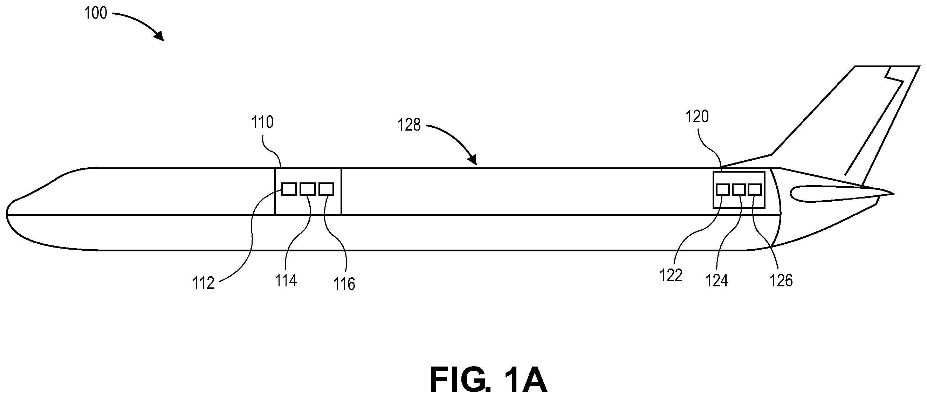

In some examples, a corrosion inhibitor coating composition or formulation can be applied to protect a substrate and other layers or portions of a vehicle 100 from the environment. FIG. 1A illustrates a schematic view of a vehicle 100, according to an implementation. As shown, the vehicle 100 may include an airplane. The vehicle 100 may also or instead include other types of aircrafts such as helicopters, unmanned aerial vehicles (UAVs), spacecrafts, marine crafts, or the like. In other implementations, the vehicle 100 may be or include a car, a boat, a train, or the like. In yet other implementations, the system and method described below may not be implemented in a vehicle, and rather may be implemented in a building. The vehicle 100 may include one or more lavatories (one is shown: 110). The lavatory 110 may include a sink 112, a toilet 114, and a sensor 116. The sensor 116 may sense/determine whether the lavatory 110 is occupied (e.g., by a passenger) or unoccupied. For example, the sensor 116 may be or include a motion sensor. The vehicle 100 may also include one or more kitchens or galleys (one is shown: 120). The kitchen 120 may include a sink 122, a dishwasher 124, and an ice maker 126. On one or more external surfaces or components of the vehicle 100, a corrosion inhibitor coating composition 128 may be applied to prevent or resist corrosion when exposed to a variety of harsh environmental conditions.

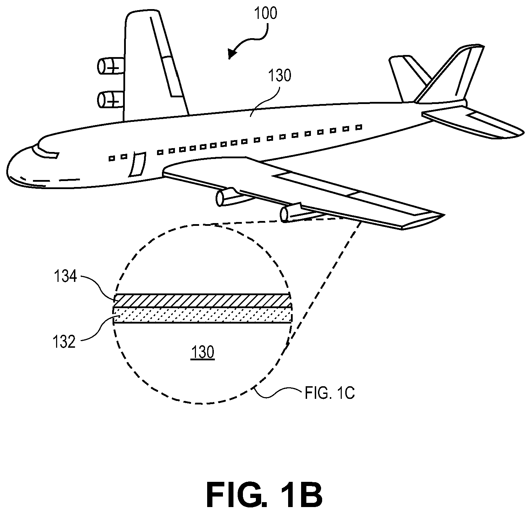

FIG. 1B depicts an application of a structural component including a corrosion inhibition composition applied to an aerospace vehicle, in accordance with the present disclosure. An application of the presently disclosed coating composition or method is shown on an aerospace vehicle 100, whereby vehicle substrate 130 is applied with the presently disclosed coating composition. Exploded view 1C is shown having vehicle substrate surface 130 with substrate surface layer 132 and corrosion inhibitor coating composition layer 134 so as to impart corrosion resistance or inhibition to the surface of the substrate 130, and/or into a structural component of or a portion of a vehicle. In one example the application of the presently disclosed coating composition is directed to an external surface of the aerospace vehicle 100. In examples, additional coating layers, such as paints, coatings, or other protective coatings can be applied upon the corrosion inhibitor coating composition layer 134. It should be noted that substrate surface layer 132 is optional in certain examples.

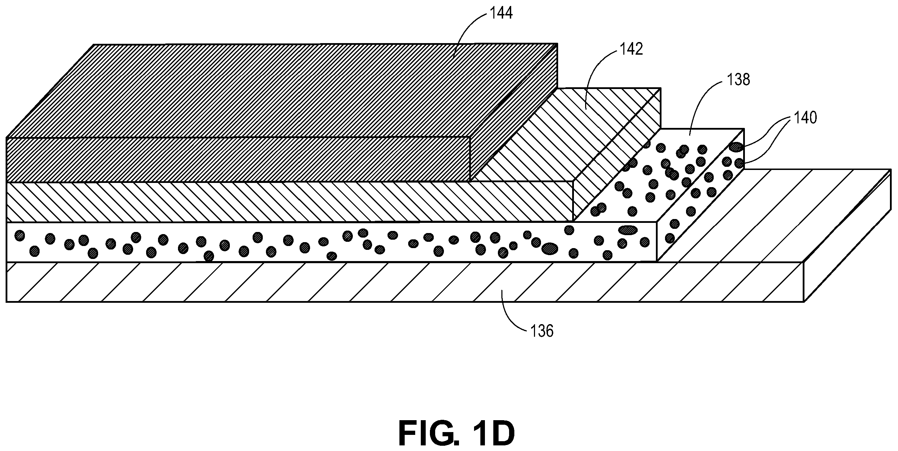

FIG. 1D is an additional cross-section schematic of an exemplary corrosion inhibition coating composition in the context of use, in accordance with the present disclosure. The context can include an article or component of a vehicle or other structure. In an illustrative example, a substrate 136 is shown, having a corrosion resistant coating composition 138 applied or deposited on a surface of the substrate 136. Also shown, applied onto the corrosion resistant coating composition 138, containing a corrosion inhibitor component 140 is a primer 142 layer, followed by a top coat 144 formulation applied onto the primer 142 layer.

In examples, the substrate can be or include a metal, a polymer, a polymer composite, or a combination thereof. In certain examples, the substrate includes aluminum, titanium, steel and alloys thereof, and in examples, includes nickel plated steel or a plating including one or more transition metals, including, but not limited to scandium, titanium, vanadium, chromium, manganese, iron, cobalt, nickel, copper, zinc, yttrium, zirconium, niobium, molybdenum, technetium, ruthenium, rhodium, palladium, silver, cadmium, or combinations thereof. In other examples, the article includes no adhesive or primer between the substrate and the corrosion inhibitor coating composition. In examples, the polymer composite can include one or more polymers, one or more reinforcing particles or fibers, or combinations thereof. The article can be or include a component or part of an aerospace vehicle or a marine vehicle, or the article can be or include an external surface thereof. Materials including aerospace alloys such as clad aluminum and aluminum alloys, as well as other corrosion prone metals used in aerospace applications may be used. In examples, an external component or standalone coating can be included or added on the corrosion inhibiting coating surface thereof. The component corrosion inhibiting coating can also be used as a sealing agent for porous anodized finishes on various passive substrates. In examples, the primer 142 layer can be or include epoxy, phenolic epoxy-polyamine primers, or other polymeric aerospace primers, or primers defined as per BMS 10-11 used for commercial airplane applications, primers as per MIL-PRF-23377 Class C, and also primers used for fuel tanks can be included. In examples, the top coat 144 can be or include polyurethane, polysiloxane based topcoats, typically used in commercial airplane applications.

In examples, a substrate is coated with a corrosion inhibitor coating composition disposed on a surface of the substrate, the corrosion inhibitor coating including 2,5-dimercapto 1,3,4-thiadiazole (DMCT), at least one reactive silane, and a catalyst, and wherein the at least one reactive silane comprises tetraethoxysilane (TEOS), vinyltriethoxysilane (VTS), 3-glycidoxypropyltrimethoxysilane (GPTMS), or a combination thereof. The corrosion inhibitor coating composition does not comprise chromium. The catalyst can include zirconium isopropoxide, acetic acid, dilute hydrochloric acid, and the like. In examples, the 2,5-dimercapto 1,3,4-thiadiazole (DMCT) is present in an amount of from about 0.1 % to about 5.0 %, or from about 0.1 to about 4% or from about 0.1 to about 3.5% wt % based on a total weight of the corrosion inhibitor coating composition. An applied thickness of the corrosion inhibitor coating composition can be from about 30 nm to about 10 microns, from about 100 nm to about 5 microns, or from about 100 nm to about 2 microns.

The corrosion-inhibitor may be an organic or inorganic compound that imparts corrosion resistance to a metal when at least a portion of it is dissolved. For example, the corrosion inhibitor may be a plurality of corrosion inhibitor particles, such as a plurality of chemically reactive, non-chrome corrosion-inhibitor particles. The corrosion inhibitor particles may be thiol-containing corrosion inhibitor particles in that they include an insoluble thiol or sulfide containing organic molecule.

In an example, and as used herein, the term "non-chrome" refers to materials that are chromium free, for example, they may not include chromium (VI). The corrosion inhibitor may be a disulfide/dithiol compound, for example, an insoluble thiol or sulfide containing organic molecule. The thiol or sulfide containing organic molecule may be a polydisulfide, such as a mercaptan-terminated polysulfide of dimercaptothiadiazole.

The corrosion-inhibitor may be derived from crude non-chrome corrosion inhibitor particles, for example, bulk non-chrome corrosion inhibitor particles formed according to known synthesis routes or available as commercial powders. In an example, the corrosion inhibitor comprises 2,5-dimercapto-1,3,4-thiadiazole (DMCT). Accordingly, the crude corrosion inhibitor may be 5,5-dithiobis-(1,3,4-thiadiazole-2(3H)-thione), Zn (DMCT)₂ or Zn (bis-DMCT)₂.

Preparation of a corrosion-inhibiting particle can include precipitation of an insoluble species, such as by dissolving a compound in an organic solvent and then precipitating the corrosion inhibitor out of solution by adding the dissolved compound into a non-solvent. For example, a compound such as the dimer of DMCT, bis-DMCT, may be dissolved in an organic solvent such as THF, and the dissolved bis-DMCT may be added to water to precipitate a crude corrosion inhibitor particle. Alternatively, crude corrosion-inhibitor may be derived from bis-DMCT (e.g., VANLUBE^{®} 829 available from Vanderbilt Chemicals, LLC, Norwalk, CT), or Zn (DMCT)₂ (e.g., INHIBICOR^{®} 1000 or WAYNCOR^{®} 204 available from Wayne Pigment Corporation, Milwaukee, WI), or a combination of both. In alternate examples, the corrosion inhibitor may also comprise strontium aluminium polyphosphate hydrate (SAPP) (available as HEUCOPHOS^{®} SAPP from Heubach GmbH of Langelsheim, Germany). Examples of the corrosion inhibitor can include 2,5-dimercapto-1,3,4-thiadiazole (DMCT) from Alfa Aeser Chemicals and Acros Organics Chemicals, which can be dispersed or dissolved in ethanol or isopropyl alcohol, respectively, and may be used in the coating solutions or formulations described herein. Metal salts of DMCT, oligomers of DMCT, or other polymeric DMCT sources can be used as alternatives.

The one or more corrosion inhibitor coating compositions can be or include, but are not limited to, one or more compounds including at least one corrosion inhibitor, at least one reactive silane, or the like, or any combination thereof. Organosilanes are generally understood to be, but not necessarily limited to, multifunctional silicon-containing molecules that include a reactive functional group and one or more hydrolysable alkoxy group. Illustrative silanes can include, but are not limited to, bis(trimethoxysilylethyl)benzene, bis(triethoxysilylethyl)benzene, 3-acryloxypropyltrimethoxysilane, 3-methacryloxypropyltrimethoxysilane, aminopropyltrimethoxysilane, vinyl trimethoxysilane, allyl trimethoxysilane, tetraethylorthosilicate (TEOS), vinyltriethoxysilane (VTS), 3-glycidoxypropyltrimethoxysilane (GPTMS), methyltrimethoxysilane (MTMS), or combinations thereof. Other illustrative glycidoxy functional or epoxy functional silanes may include, but are not limited to, glycidoxypropyltrialkoxysilane (such as glycidoxypropyltrimethoxysilanes, 3-glycidoxypropyltriethoxysilane, and the like), 3-(2,3-epoxypropoxypropyl)methyldiethoxysilane, 2-(3,4-epoxycyclohexyl)ethyltrimethoxysilane, 3-(2,3-epoxypropoxypropyl)methyldimethoxysilane, 2-(3,4-epoxycyclohexyl)ethylmethyldimethoxysilane, 8-glycidoxyoctyltrimethoxysilane, 1-(3-glycidoxypropyl)-1,1,3,3,3-pentaethoxy-1,3-disilapropane, and combinations thereof. Illustrative mercapto functional silanes may include, but are not limited to, 3-mercaptopropyltriethoxysilane, 3-mercaptopropyltrimethoxysilane, 11-mercaptoundecyltrimethoxysilane, s-(octanoyl)mercaptopropyltriethoxysilane, (mercaptomethyl)methyldiethoxysilane, 3-mercaptopropylmethyldimethoxysilane, mercaptopropyltrialkoxysilanes (such as mercaptopropyltrimethoxysilanes 3- Mercaptopropyltrimethoxysilane), mercaptoundecyltrimethoxysilane, (mercaptomethyl)methyldiethoxysilane, and combinations thereof. In exemplary examples of corrosion inhibitor coating compositions, where more than one reactive silane is included in the composition, it can be advantageous for a first reactive silane to be different than a second reactive silane, such that additional organic functionality can be added to the corrosion inhibitor coating compositions, thus providing additional potential reactive functional groups present in the corrosion inhibitor coating compositions. Without being bound by any particular theory, additional functional group chemistry within the corrosion inhibitor coating compositions may provide versatility or utility for the corrosion inhibitor coating composition to be used in numerous applications with respect to polymer formulation layers, substrates, or a combination thereof.

The one or more silanes or organosilanes can be present in an amount of from about 0.01 weight % to about 15 weight %, based on a total weight of the corrosion inhibitor coating composition. For example, the one or more organosilanes can be present in an amount of from about 0.01 weight %, about 0.5 weight %, about 1 weight %, about 1.5 weight %, about 2 weight %, or about 2.5 weight % to about 2.75 weight %, about 3 weight %, about 3.5 weight %, about 4 weight %, about 4.5 weight %, about 10.0 weight %, or about 20.0 weight % based on a total weight of the corrosion inhibitor coating composition. In another example, the one or more organosilanes can be present in an amount of from about 0.01 weight % to about 10.0 weight %, about 1 weight % to about 8.0 weight %, about 2.0 weight % to about 6.0 weight %, about 5 weight %, or about 5 weight %, based on a total weight of the corrosion inhibitor coating composition.

The one or more organic solvents of the corrosion inhibitor coating compositions can be capable of or configured to disperse, solubilize, solvate, or otherwise dissolve one or more substances or components of the corrosion inhibitor coating composition. The one or more organic solvents of the corrosion inhibitor coating composition can also be capable of or configured to disperse, solubilize, solvate, or otherwise dissolve one or more substances, such as greases, oils, or debris, on surfaces contacted with the corrosion inhibitor coating composition. For example, the one or more organic solvents of the corrosion inhibitor coating composition can be capable of or configured to dissolve one or more of the ingredients as described for use in the corrosion inhibitor coating compositions. The one or more organic solvents can also be capable of or configured to prepare a surface for subsequent treatment or application of a sealant, coating or other material to be applied to the same substrate as the corrosion inhibitor coating composition. For example, the one or more organic solvents can be capable of or configured to at least partially provide a cleaning treatment of a surface or substrate. It should be appreciated that any organic solvent capable of or configured to dissolve one or more components of the corrosion inhibitor coating composition and/or prepare the surface for subsequent treatment or application of a coating material or adhesive can be utilized.

The one or more organic solvents can be or include, but are not limited to, aliphatic hydrocarbons, aromatic compounds, such as aromatic hydrocarbons, halogenated hydrocarbons, nitrated hydrocarbons, ketones, amines, esters, alcohols, aldehydes, ethers, or the like, or combinations thereof.

Illustrative aliphatic hydrocarbon that can be utilized as the one or more organic solvents can be or include, but are not limited to, n-pentane, n-hexane, n-octane, n-nonane, n-decane, or homologues thereof, 2,2,4-trimethyl pentane, or the like, or any combination thereof.

Illustrative aromatic compounds that can be utilized as the one or more organic solvents can be or include, but are not limited to, cyclohexane, benzene, toluene, ethylbenzene, xylene, tetralin, hexafluoro xylene, or the like, or any combination thereof.

Illustrative halogenated hydrocarbons that can be utilized as the one or more organic solvents can be or include, but are not limited to, chloroform, trichloro ethylene, dichloromethane, or the like, or combinations thereof.

Illustrative ketone organic solvents can be or include, but are not limited to, acetone, methyl ethyl ketone (MEK), diethyl ketone, methyl propyl ketone (MPK), dipropyl ketone, methyl isobutyl ketone (MIBK), cyclopentanone, cyclohexanone, methyl amyl ketone, n-methyl-2-pyrrolidone, diisobutyl ketone, acetophenone, or the like, or combinations thereof.

Illustrative esters that can be utilized as the one or more organic solvents can be or include, but are not limited to, methyl acetate, ethyl acetate, isopropyl acetate, n-butyl acetate, cellosolve acetate, or the like, or combinations thereof.

Illustrative alcohols that can be utilized as the one or more organic solvents can be or include, but are not limited to, methanol, ethanol, n-propanol, i-propanol, n-butanol, i-butanol, s-butanol, n-amyl alcohol, i-amyl alcohol, cyclohexanol, n-octanol, ethanediol, diethylene glycol, 1,2-propanediol, or the like, or combinations thereof.

Illustrative aldehydes that can be utilized as the one or more organic solvents can be or include, but are not limited to, furfuraldehyde, or the like.

Illustrative ethers that can be utilized as the one or more organic solvents can be or include, but are not limited to, diethyl ether, diisopropyl ether, dibutyl ether, methyl tert butyl ether, 1,4-dioxane, tetrahydrofuran, oligomers of perfluoropolyethers, such as the GALDEN^{®} line, which is commercially available from Solvay of Houston, TX, or the like, or combinations thereof.

Certain embodiments of corrosion inhibitor coating compositions as described herein may have very different viscosities which may be tailored according to their method of application. The amount of the one or more organic solvents present in the corrosion inhibitor coating composition can vary widely, which may directly influence the viscosity of a corrosion inhibitor coating composition. The corrosion inhibitor coating composition can be applied to a surface or between two substrates by way of brushing, airbrush spraying, spray gun, dropping, pouring, pipetting, wiping, and the like. The amount of the one or more organic solvents present can be at least partially determined by a target or desired viscosity of the corrosion inhibitor coating composition. The amount of the one or more organic solvents present in the corrosion inhibitor coating composition can be from about 75 weight % to about 99.5 weight %, based on a total weight of the corrosion inhibitor coating composition. For example, the amount of the one or more organic solvents present in a corrosion inhibitor coating composition can be from about 75 weight %, about 80 weight %, about 85 weight % or about 90 weight % to about 95 weight %, about 98 weight %, about 99 weight %, or about 99.5 weight %, based on a total weight of the corrosion inhibitor coating composition. In another example, the amount of the one or more organic solvents present in the corrosion inhibitor coating composition may be from about 75 weight % to about 99.5 weight %, about 80 weight % to about 99 weight %, about 85 weight % to about 95 weight %, or about 85 weight % to about 90 weight %, based on a total weight of the corrosion inhibitor coating composition. In other examples, the viscosity or consistency of the sol-gel coating formulations can be adjusted by changing the ratio of the various organosilanes as well as the amount of solvent used in the formulation.

The corrosion inhibitor coating composition, in examples, can have a shear viscosity of from about 0.01 Pa·s to about 10 Pa·s, at a temperature of about 25°C. For example, the corrosion inhibitor coating composition can have a shear viscosity of from about 0.01 Pa·s, about 2 Pa·s, about 4 Pa·s, or about 5 Pa·s to about 6 Pa·s, about 8 Pa·s, about 9 Pa·s, or about 10 Pa·s at a temperature of about 25°C. In another example, the corrosion inhibitor coating composition can have a shear viscosity of from about 0.01 Pa·s to about 10 Pa·s, about 2 Pa·s to about 8 Pa·s, or about 4 Pa·s to about 6 Pa·s, at a temperature of about 25°C. The measurement of the corrosion inhibitor coating composition may be conducted at a shear rate of about 0.1 Hz to about 100 Hz, at a temperature of about 25°C. The corrosion inhibitor coating composition can have a viscosity of about 0.01 to about 10 Pa·s at a shear rate of about 0.1 to about 100 sec⁻¹.

The corrosion inhibitor coating composition can include one or more catalysts. As used herein, the term "catalyst" can refer to any component, compound, or substance that can increase the rate of a chemical reaction related to coating crosslinking or formation, without necessarily undergoing a permanent chemical change.

The one or more catalysts can be present in an amount of from about 0.1 weight % to about 10 weight %, based on a total weight of the corrosion inhibitor coating composition. For example, the one or more catalysts can be present in an amount of from about 0.1 weight %, about 0.5 weight %, about 1 weight %, about 1.5 weight %, about 2 weight %, about 3 weight %, about 4 weight %, or about 5 weight % to about 6 weight %, about 6.5 weight %, about 7 weight %, about 8 weight %, about 9 weight %, or about 10 weight %, based on a total weight of the corrosion inhibitor coating composition. In another example, the one or more catalysts can be present in an amount of from about 0.1 weight % to about 5 weight %, about 0.5 weight % to about 2.5 weight %, or about 0.5 weight % to about 1.0 weight %.

### Examples

Example 1: the corrosion resistant (Modified) conversion coating of Example 1 is formulated in two parts, Part A and Part B. Part A preparation includes adding glacial acetic acid (GAA, Sigma Aldrich) to zirconium propoxide (TPOZ, Sigma Aldrich) with stirring for 10 min. Upon ensuring all glassware was completely dry at this point to avoid the formation of zirconium hydroxide. Deionized water was added to the above GAA:TPOZ mixture and stirred for 10 min. The resulting solution remained translucent and was allowed to remain undisturbed for two weeks to have the solution clarify. Part B preparation includes (3-glycidoxypropyl)trimethoxysilane (GPTMS, Sigma Aldrich) being added to the tetraethyl orthosilicate (TEOS, Sigma Aldrich) and stirring for 10 min. Ethanol (Hymann) was added to the above GPTMS:TEOS mixture and stirred for overnight (approximately 16 hours) to complete hydrolysis and condensation reactions. 2,5-Dimercapto 1, 3, 4-Thiadiazole (DMCT, Alfa Aesar) was added to the part B mixture and stirred for 10 min. Finally, Part A was added to part B gradually under vigorous stirring.

**Table 1: Part A composition ingredients**

| **Chemicals Name** | **Molecular Weight** | **No. of moles** | **Weight in grams** |
|---|---|---|---|
| **Part A** | | | |
| **Acetic acid** | 36.45 | 0.007 | 0.45 |
| **Zirconium propoxide** | 327.57 | 0.003 | 1 |
| **Water** | 18 | 2.75 | 50 |

**Table 2: Part B composition ingredients**

| **Chemicals Name** | **Molecular Weight** | **No. of moles** | **Weight in gm** |
|---|---|---|---|
| **Part B** | | | |
| **Tetraethylorthosilicate (TEOS)** | 208.3 | 0.1 | 10.4 |
| **Ethanol** | 46 | 0.21 | 10 |
| **3-glycidoxypropyltrimethoxysilane (GPTMS)** | 236.33 | 0.04 | 10 |
| **2,5-Dimercapto 1, 3, 4-diathiazole (DMCT)** | 150.23 | 0.01 | 1.6 |

The weight percentage of the DMCT (2 wt% based on a total weight of the corrosion inhibition composition) was calculated considering both Part A & B weight percentages. Pot life of the developed corrosion resistant coating was studied based on the sedimentation of DMCT particles.

Coating Application: The developed corrosion resistant coating was applied on AA 2024 panels by spray application at different time intervals of ageing, i.e., 5 min, 30 min and 2 hours.

Curing of the coating was accomplished at room temperature for 24 hours and subjected to a salt spray test. Evaluation of 2,5-Dimercapto 1, 3, 4-Thiadiazole being identified as having two color intensities for two different makes i.e., Acros Organics and Alfa Aesar. A confirmation Fourier Transform Infrared Spectoscopy (FTIR) analysis exhibited that peaks for both the chemicals were similar.

Pot life of corrosion resistant Boegel using DMCT (Alfa Aesar) at different time intervals showed that the DMCT particles in the Part B solution was not dissolved but completely dispersed in the solution. No precipitation or sedimentation was observed. The color of the solution turned to yellow color. The color of the solution remains same after addition of part-A to part B solution. After 30 min, some of the particles started settling at the bottom due to gravitational force. But once mixed, the solution under stirring showed that the particles are uniformly distributed, and the color intensity maintains. Pot life of corrosion resistant coatings using DMCT (Acros Organics) at different time intervals exhibited that the DMCT particles in Part B solution were also completely dissolved. No precipitation or sedimentation was observed. After addition of Part-A solution to part-B, the solution turns translucent. After 10 min stirring, the solution became transparent. The developed solution was used for application on AA 2024 panels.

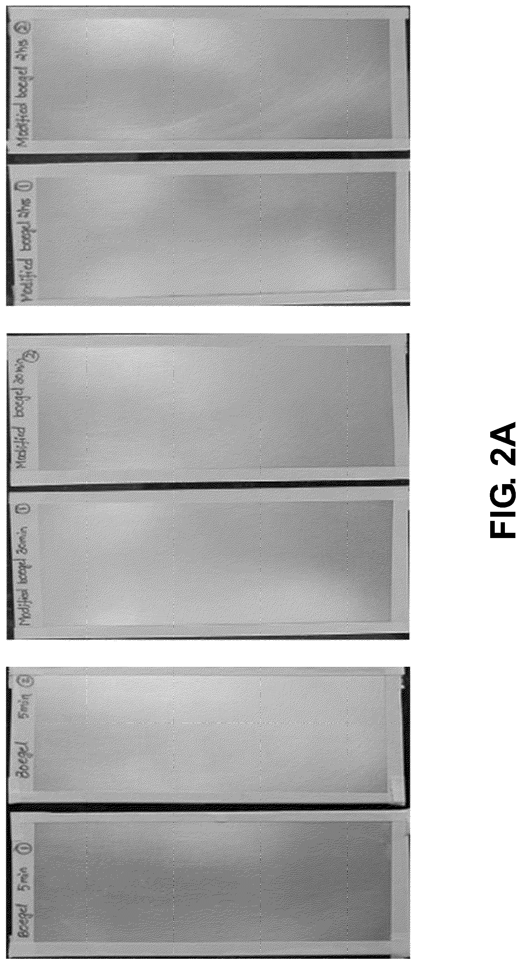

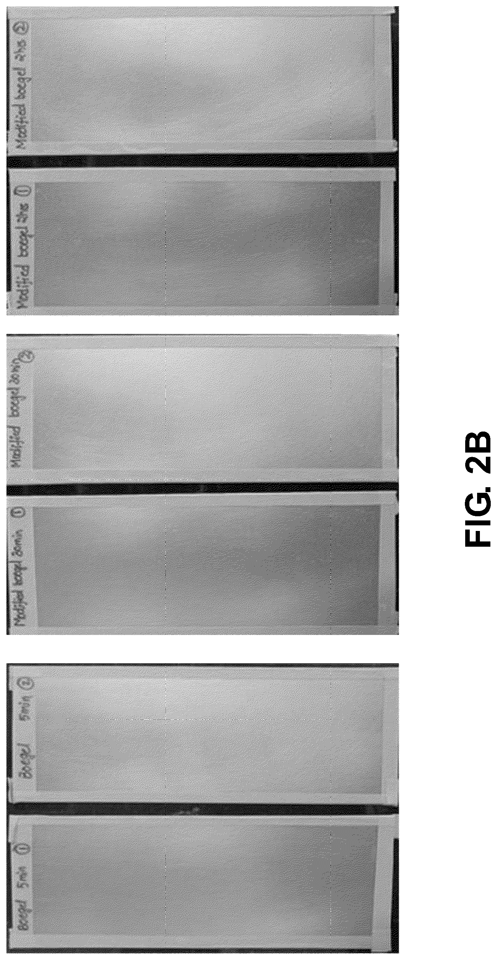

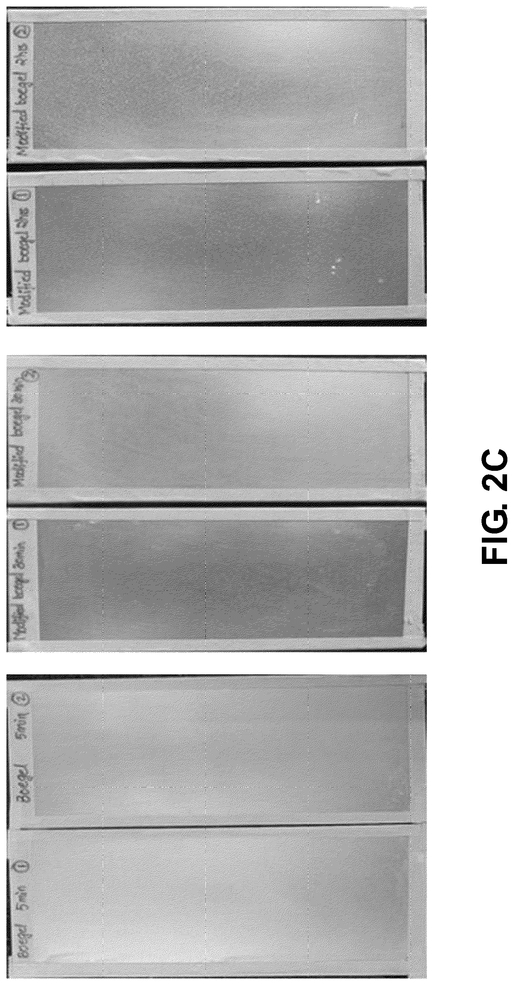

FIGS. 2A-2C are photographs of exemplary coatings of Example 1 after coating, after 168 hours of a salt spray test, and after 336 hours of a salt spray test, respectively, in accordance with the present disclosure. The evaluations of various coatings shown in FIG. 2A are before the salt spray test, showing that the corrosion resistant coatings were transparent and uniform on AA 2024 panels. From left to right, the panels show a photographic example of Example 1 mixed and allowed to sit for intervals of 5 minutes (two samples), 30 minutes (two samples), and 2 hours (two samples). The photographs shown in FIG. 2B, show the same six samples of FIG. 2A, after 168 hours of the salt spray test. No corrosion products observed on the surface of corrosion resistant coated AA 2024 panels after 168 h salt spray exposure. The photographs shown in FIG. 2C, shows the same six samples of FIG. 2A, after 336 hours of the salt spray test. No corrosion products observed on the surface of corrosion resistant coated AA 2024 panels after 336 hours of the salt spray exposure.

**Example 2: Sol-gel coating formulation with TEOS, VTS & DMCT (TEOS: VTS (2:1))** The mixture of TEOS (2) and VTS (1) were added to a reaction bottle separately and stirred for 10 minutes using a magnetic stirrer. Ethanol was added as a solvent and stirred for another 10 minutes. Distilled water was added under vigorous stirring condition at room temperature over a period of 10 minutes. Complete hydrolysis was ensured via acid catalyzed reaction by adding 1N hydrochloride acid solution, added dropwise. The final solution was stirred vigorously for 16 hours at room temperature (at or about 25°C) to ensure hydrolysis and condensation of the silica network. Finally, DMCT was added 1 wt% to the above sol-gel coating. Sol-gel solutions were applied on cleaned AA 2024 substrate by spray application at different intervals and cured at room temperature. Cured coatings were analyzed by subjecting to salt spray studies as per ASTM B117.

**Table 3: Example 2 composition ingredients**

| **Chemicals Name** | **Molecular Weight** | **No. of moles** | **Weight in gm** |
|---|---|---|---|
| **Tetraethylorthosilicate (TEOS)** | 208.3 | 0.15 | 20.8 |
| **Vinyltriethoxysilane (VTS)** | 190.3 | 0.05 | 9.5 |
| **Ethanol** | 46 | 0.3 | 13.8 |
| **Water** | 18 | 0.16 | 3 |
| **1N HCl (Catalyst)** | 36.45 | 0.1 | 0.1 |
| **2,5-Dimercapto 1, 3, 4-diathiazole (DMCT)** | 150.23 | 0.006 | 1 |

Pot life of TEOS, VTS sol-gel coating with DMCT (Alfa Aesar) at different time intervals showed that the DMCT particles in sol-gel solution were not dissolved but completely dispersed. The color of the solution turned to a yellow color. No precipitation was observed. After 30 minutes, the DMCT particles began settling at the bottom due to gravitational force. But once mixed, the solution under stirring the particles were uniformly distributed and the color intensity remained. The pot life of the sol-gel solution with DMCT particles was identified through coating application at 3 different time intervals: 5 minutes, 30 minutes, and 2 hours.

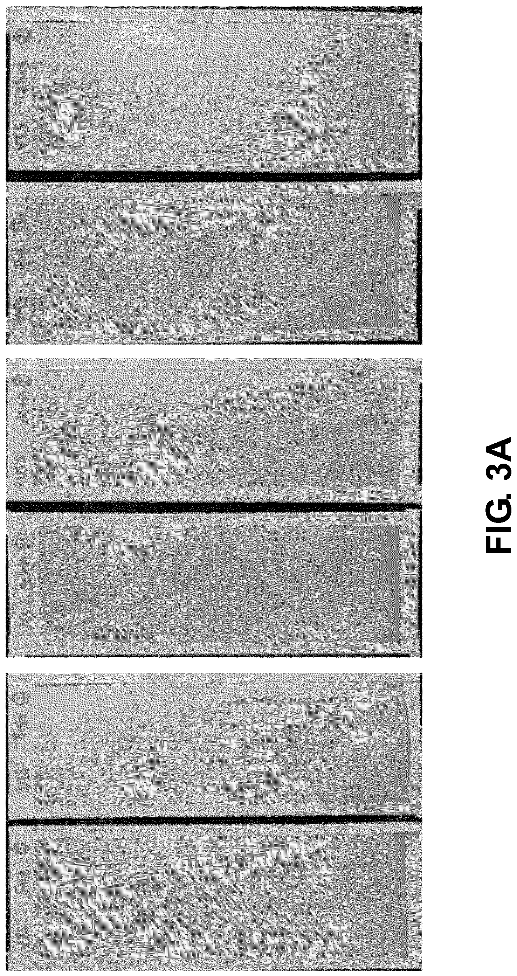

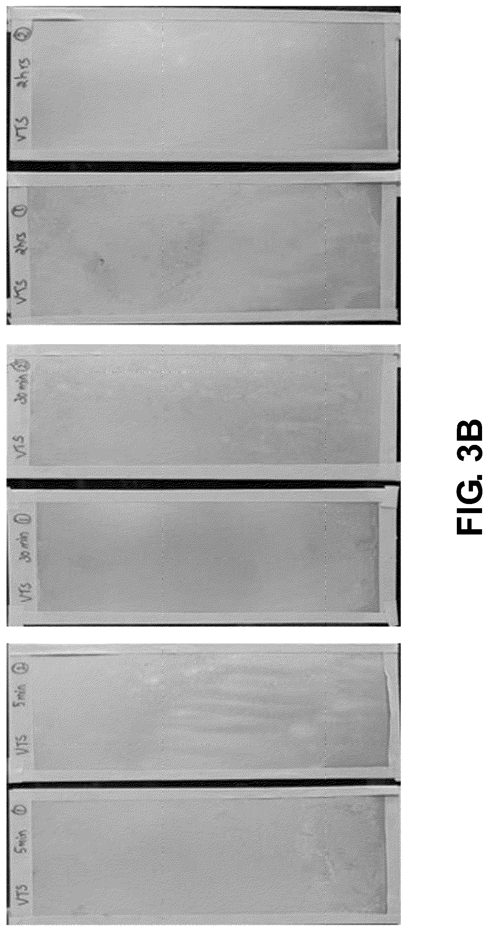

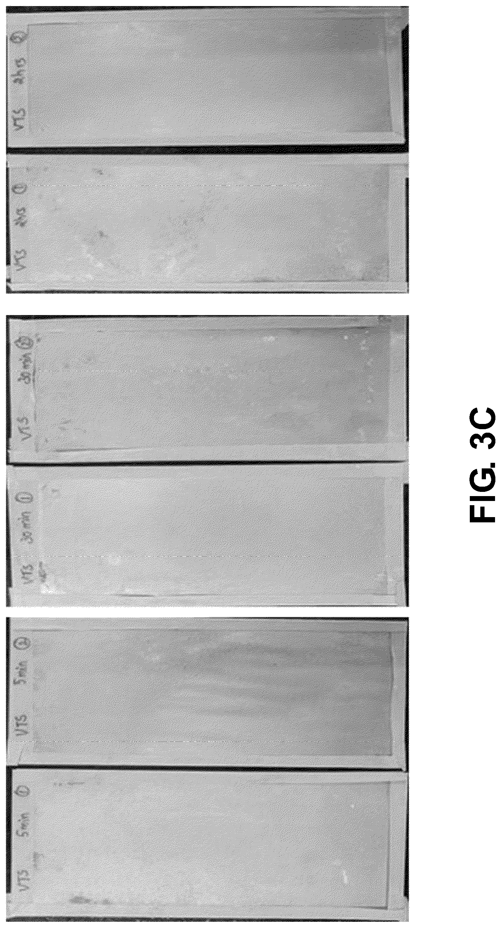

FIGS. 3A-3C are photographs of exemplary coatings of Example 2 after coating, after 168 hours of a salt spray test, and after 336 hours of a salt spray test, respectively, in accordance with the present disclosure. The evaluations of various coatings shown in FIG. 3A are before the salt spray test, showing that the corrosion resistant coatings were transparent and uniform on AA 2024 panels. From left to right, the panels show a photographic example of Example 2 mixed and allowed to sit for intervals of 5 minutes (two samples), 30 minutes (two samples), and 2 hours (two samples). The TEOS, VTS + DMCT sol-gel coating was transparent and uniform on AA 2024 panels. The photographs shown in FIG. 3B, show the same six samples of FIG. 3A, after 168 hours of the salt spray test. No corrosion products observed on the surface of corrosion resistant coated AA 2024 panels after 168 h salt spray exposure. The photographs shown in FIG. 3C, shows the same six samples of FIG. 3A, after 336 hours of the salt spray test. No corrosion products observed on the surface of corrosion resistant coated AA 2024 panels after 336 hours of the salt spray exposure.

**Example 3: Sol-gel coating formulation with TEOS, MTMS & DMCT (TEOS: MTMS (2:1))**. The mixture of TEOS (2) and MTMS (1) were added in a reaction bottle separately and stirred for 10 minutes on magnetic stirrer. Ethanol was added as a solvent and stirred for another 10 minutes. Distilled water was added under vigorous stirring condition at room temperature over period of 10 minutes. Complete hydrolysis was ensured via acid catalyzed reaction by adding 1N hydrochloride acid solution in a dropwise manner. The final solution was stirred vigorously for 16 hours at room temperature to secure hydrolysis and condensation of the silica network. Finally, DMCT was added 2 wt% to the above sol-gel coating and identified pot life. Sol-gel solutions were applied on cleaned AA 2024 substrates by spray application at different intervals and cured at room temperature. Cured coatings were analyzed by subjecting to salt spray studies as per ASTM B117.

**Table 4: Example 3 composition ingredients**

| **Chemicals Name** | **Molecular Weight** | **No. of moles** | **Weight in gm** |
|---|---|---|---|
| **Tetraethylorthosilicate (TEOS)** | 208.3 | 0.1 | 20.8 |
| **Methyltrimethoxysilane (MTMS)** | 136.22 | 0.09 | 12.5 |
| **Isopropyl alcohol (IPA)** | 60.1 | 0.25 | 15 |
| **Water** | 18 | 0.16 | 3 |
| **1N HCl (Catalyst)** | 36.45 | 0.1 | 0.1 |
| **2,5-Dimercapto 1, 3, 4-diathiazole (DMCT)** | 150.23 | 0.006 | 1 |

Pot life of TEOS, MTMS sol-gel coating with DMCT at different time intervals exhibited that the DMCT particles in TEOS, MTMS sol-gel solution were not dissolved but completely dispersed. The color of the solution turned to a yellow color. No precipitation was observed. After 30 min, the particles began settling at the bottom due to gravitational force. But once mixed, the solution under stirring showed that the particles were uniformly distributed, while the color intensity remained. The pot life of the sol-gel solution with DMCT particles was identified through coating application at 3 different time intervals: 5 minutes, 30 minutes, and 2 hours.

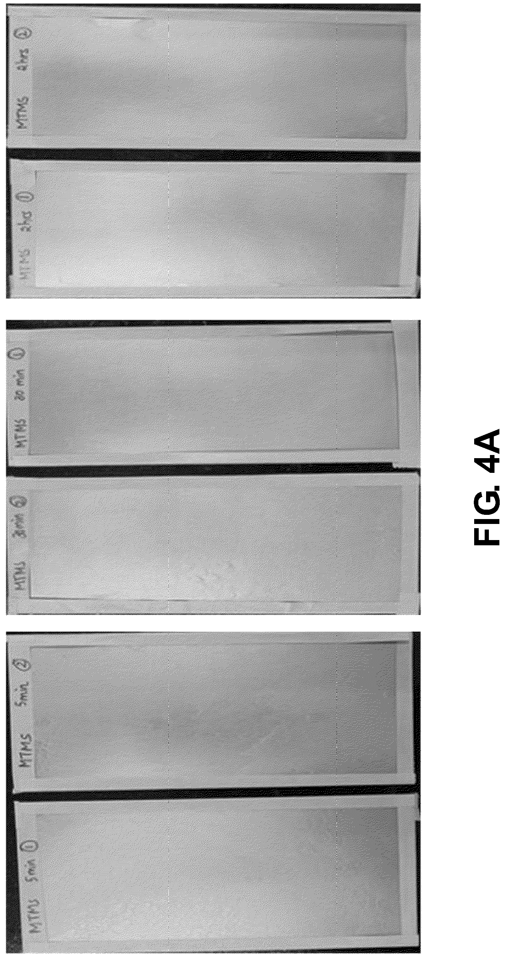

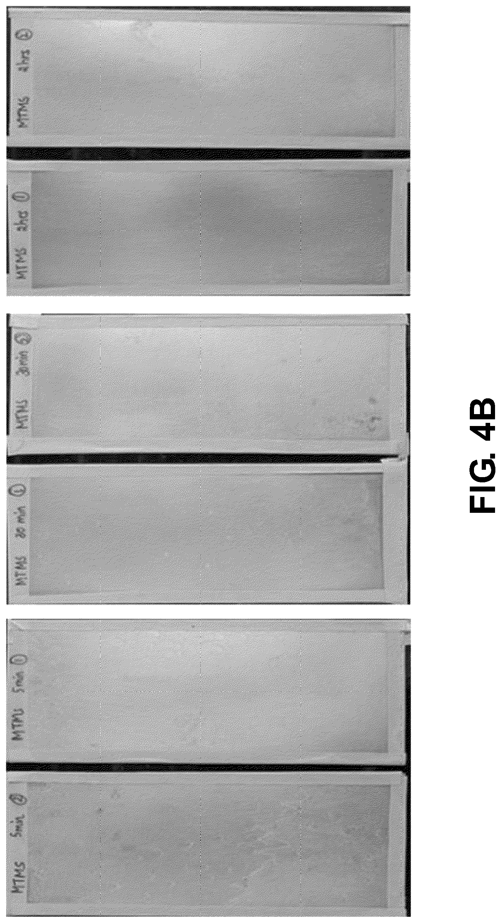

FIGS. 4A-4C are photographs of exemplary coatings of Example 3 after coating, after 168 hours of a salt spray test, and after 336 hours of a salt spray test, respectively, in accordance with the present disclosure. The evaluations of various coatings shown in FIG. 4A are before the salt spray test, showing that the corrosion resistant coatings were transparent and uniform on AA 2024 panels. From left to right, the panels show a photographic example of Example 3 mixed and allowed to sit for intervals of 5 minutes (two samples), 30 minutes (two samples), and 2 hours (two samples). The photographs shown in FIG. 4B, show the same six samples of FIG. 4A, after 168 hours of the salt spray test. No corrosion products observed on the surface of corrosion resistant coated AA 2024 panels after 168 h salt spray exposure. The photographs shown in FIG. 2C, shows the same six samples of FIG. 4A, after 336 hours of the salt spray test. No corrosion products observed on the surface of corrosion resistant coated AA 2024 panels after 336 hours of the salt spray exposure.

**Example 4: Sol-gel coating formulation with TEOS, GPTMS & DMCT (TEOS: VTS (2:1)).** The mixture of TEOS (2) and GPTMS (1) was added into a reaction bottle separately and stirred for 10 minutes using a magnetic stirrer. Ethanol was added as the solvent and the solution was stirred for another 10 minutes. Distilled water was added under vigorous stirring conditions at room temperature over a period of 10 minutes. Complete hydrolysis was ensured via acid catalyzed reaction by adding 1N hydrochloride acid solution in a dropwise manner. The final solution was stirred vigorously for 16 hours at room temperature to ensure hydrolysis and condensation of the silica network. Finally, DMCT was added 2 wt% to the above sol-gel coating. Sol-gel solutions were applied on cleaned AA 2024 substrate by spray application at different intervals and cured at room temperature. Cured coatings were analyzed by subjecting to salt spray studies as per ASTM B117.

**Table 5: Example 4 composition ingredients**

| **Chemicals Name** | **Molecular Weight** | **No. of moles** | **Weight in gm** |
|---|---|---|---|
| **Tetraethylorthosilicate (TEOS)** | 208.3 | 0.1 | 20.8 |
| **3-Glycidoxypropyltrimethoxysilane (GPTMS)** | 236.33 | 0.04 | 11.1 |
| **Ethanol** | 46 | 0.3 | 13.8 |
| **Water** | 18 | 0.16 | 3 |
| **1N HCl (Catalyst)** | 36.5 | 0.1 | 0.1 |
| **2,5-Dimercapto 1, 3, 4-diathiazole (DMCT)** | 150.23 | 0.006 | 1 |

Pot life evaluations of TEOS, GPTMS sol-gel coating with DMCT at different time intervals showed that the DMCT particles in TEOS, GPTMS sol-gel solution were not dissolved but were completely dispersed. The color of the solution turned to a yellow color. No precipitation was observed. After 30 min, the particles started settling at the bottom due to gravitational force. Once mixed, the solution under stirring resulted in the particles being uniformly distributed with maintained color intensity. The pot life of the sol-gel solution with DMCT particles was identified through coating application at 3 different time intervals: 5 minutes, 30 minutes, and 2 hours.

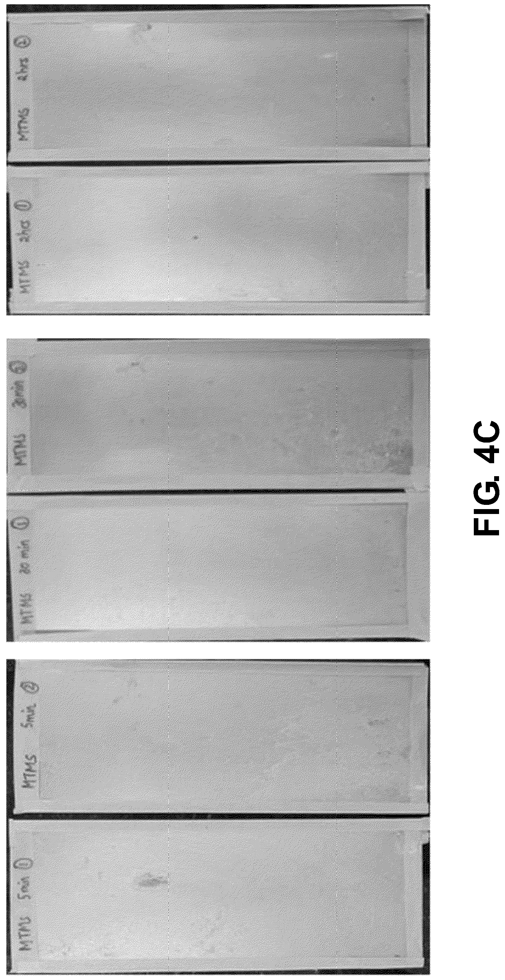

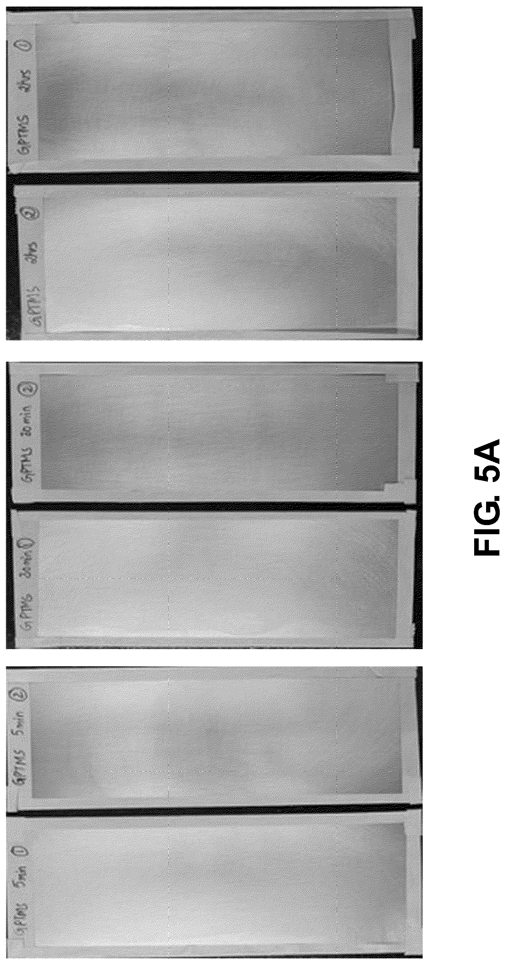

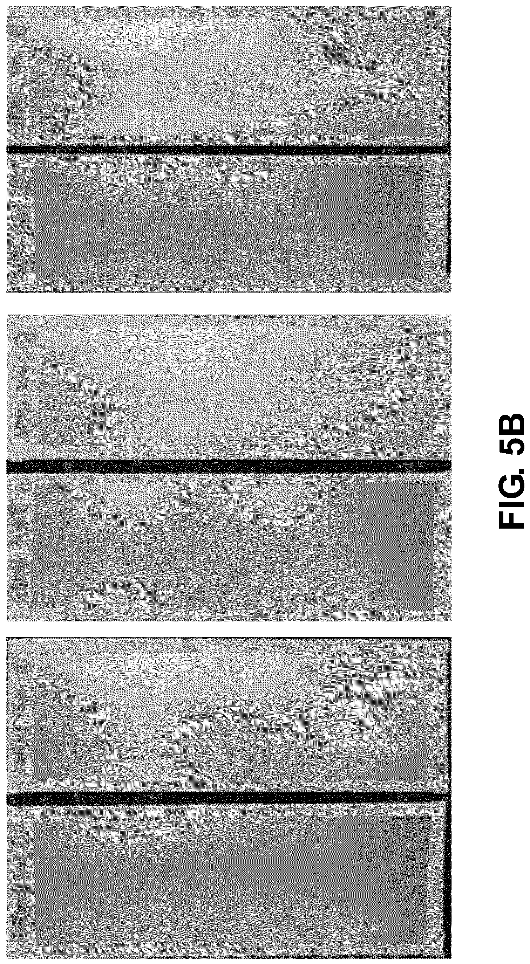

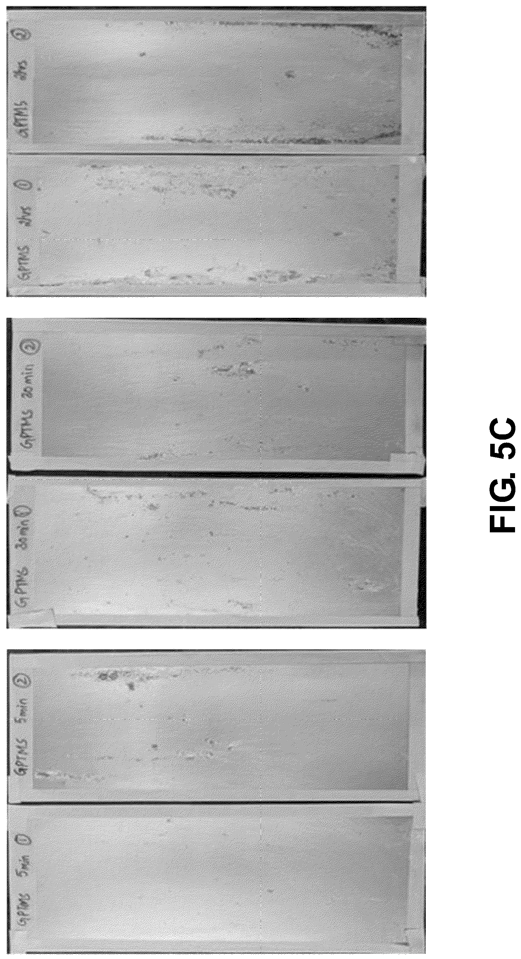

FIGS. 5A-5C are photographs of exemplary coatings of Example 4 after coating, after 168 hours of a salt spray test, and after 336 hours of a salt spray test, respectively, in accordance with the present disclosure. The evaluations of various coatings shown in FIG. 5A are before the salt spray test, showing that the corrosion resistant coatings were transparent and uniform on AA 2024 panels. From left to right, the panels show a photographic example of Example 4 mixed and allowed to sit for intervals of 5 minutes (two samples), 30 minutes (two samples), and 2 hours (two samples). The photographs shown in FIG. 4B, show the same six samples of FIG. 4A, after 168 hours of the salt spray test. No corrosion products observed on the surface of corrosion resistant coated AA 2024 panels after 168 h salt spray exposure. The photographs shown in FIG. 4C, shows the same six samples of FIG. 4A, after 336 hours of the salt spray test. Minor corrosion products observed on the TEOS, MTMS sol-gel coated AA 2024 panels after 336 hours of salt spray exposure at the edges due to draining of the salt solution. The middle portions were free from corrosion.

In general, the steps involved in the synthesis of sol-gel coatings as applied to the corrosion inhibiting coating compositions described herein include the following steps:

Hydrolysis: Different ethoxy silanes, and in examples, methoxy silanes, are used for the sol-gel synthesis. In the hydrolysis step, all the ethoxy/ethyl groups (or methoxy/methyl groups) hydrolyzed in the presence of water which results in hydroxy silane molecules.

Condensation: During the condensation step, either water condensation, alcohol condensation, or both takes place in the presence of catalyst which results the formation of crosslinked siloxanes, where all the silane molecules are combined together to form Si-O-Si linkage/bonding.

Polymerization: In the polymerization step, all the siloxane molecules are reacted together and develop chain like structure in presence of heat or light (such as a photo initiator (hv)). Organic groups or polymerizable groups are required to get polymerization.

Other Additives: As an example, 2,5-dimercapto 1,3,4-thiadiazole or other additives can be added into the sol-gel synthesis which may react with groups in the siloxane molecule or suspend in the siloxane network and promote corrosion resistant behavior to the coatings.

While the present teachings have been illustrated with respect to one or more implementations, alterations and/or modifications may be made to the illustrated examples without departing from the scope of the appended claims. For example, it may be appreciated that while the process is described as a series of acts or events, the present teachings are not limited by the ordering of such acts or events. Some acts may occur in different orders and/or concurrently with other acts or events apart from those described herein. Also, not all process stages may be required to implement a methodology in accordance with one or more aspects or embodiments of the present teachings. It may be appreciated that structural objects and/or processing stages may be added, or existing structural objects and/or processing stages may be removed or modified. Further, one or more of the acts depicted herein may be carried out in one or more separate acts and/or phases. Furthermore, to the extent that the terms "including," "includes," "having," "has," "with," or variants thereof are used in either the detailed description and the claims, such terms are intended to be inclusive in a manner similar to the term "comprising." The term "at least one of' is used to mean one or more of the listed items may be selected. Further, in the discussion and claims herein, the term "on" used with respect to two materials, one "on" the other, means at least some contact between the materials, while "over" means the materials are in proximity, but possibly with one or more additional intervening materials such that contact is possible but not required. Neither "on" nor "over" implies any directionality as used herein. The term "conformal" describes a coating material in which angles of the underlying material are preserved by the conformal material. The term "about" indicates that the value listed may be somewhat altered, as long as the alteration does not result in nonconformance of the process or structure to the illustrated embodiment. The terms "couple," "coupled," "connect," "connection," "connected," "in connection with," and "connecting" refer to "in direct connection with" or "in connection with via one or more intermediate elements or members." Finally, the terms "exemplary" or "illustrative" indicate the description is used as an example, rather than implying that it is an ideal. Other embodiments of the present teachings may be apparent to those skilled in the art from consideration of the specification and practice of the disclosure herein. It is intended that the specification and examples be considered as exemplary only, with a true scope of the present teachings being indicated by the following claims.

Further, the disclosure comprises the subject matter described in the following listed clauses.
1. A corrosion inhibitor coating composition, comprising:
   a corrosion inhibitor comprising 2,5-dimercapto 1,3,4-thiadiazole (DMCT);
   at least one reactive silane; and
   a catalyst.
2. The corrosion inhibitor coating composition of clause 1, wherein the at least one reactive silane comprises tetraethoxysilane (TEOS).
3. The corrosion inhibitor coating composition of clause 1 or clause 2, wherein the at least one reactive silane comprises vinyltriethoxysilane (VTS), 3-glycidoxypropyltrimethoxysilane (GPTMS), methyltrimethoxysilane (MTMS), or a combination thereof.
4. The corrosion inhibitor coating composition of any of clauses 1 to 3, wherein the corrosion inhibitor coating composition does not comprise chromium.
5. The corrosion inhibitor coating composition of any of clauses 1 to 4, wherein the catalyst comprises zirconium isopropoxide.
6. The corrosion inhibitor coating composition of any of clauses 1 to 5, wherein the catalyst comprises acetic acid.
7. The corrosion inhibitor coating composition of any of clauses 1 to 6, wherein the 2,5-dimercapto 1,3,4-thiadiazole (DMCT) is present in an amount of from about 0.1 % to about 5.0 % by total weight of the corrosion inhibitor coating composition.
8. The corrosion inhibitor coating composition of any of clauses 1 to 7, wherein the at least one reactive silane comprises a first reactive silane and a second reactive silane, and wherein a weight ratio of the first reactive silane to the second reactive silane is from about 0.5:1 to about 3:1.
9. The corrosion inhibitor coating composition of any of clauses 1 to 8, wherein the corrosion inhibitor further comprises a thiadiazole, a benzotriazole, an imidazole, or a combination thereof.
10. The corrosion inhibitor coating composition of any of clauses 1 to 9, wherein the corrosion inhibitor comprises 2,5-dimercapto-1,3,4-thiadiazole (DMCT).
11. The corrosion inhibitor coating composition of any of clauses 1 to 10, wherein the at least one reactive silane comprises bis(trimethoxysilylethyl)benzene, bis(triethoxysilylethyl)benzene, 3-acryloxypropyltrimethoxysilane, 3-methacryloxypropyltrimethoxysilane, aminopropyltrimethoxysilane, vinyl trimethoxysilane, allyl trimethoxysilane, tetraethylorthosilicate (TEOS), vinyltriethoxysilane (VTS), 3-glycidoxypropyltrimethoxysilane (GPTMS), methyltrimethoxysilane (MTMS), or combinations thereof.
12. The corrosion inhibitor coating composition of any of clauses 1 to 11, wherein the at least one reactive silane comprises glycidoxypropyltrialkoxysilane (such as glycidoxypropyltrimethoxysilanes, 3-glycidoxypropyltriethoxysilane, and the like), 3-(2,3-epoxypropoxypropyl)methyldiethoxysilane, 2-(3,4-epoxycyclohexyl)ethyltrimethoxysilane, 3-(2,3-epoxypropoxypropyl)methyldimethoxysilane, 2-(3,4-epoxycyclohexyl)ethylmethyldimethoxysilane, 8-glycidoxyoctyltrimethoxysilane, 1-(3-glycidoxypropyl)-1,1,3,3,3-pentaethoxy-1,3-disilapropane, and combinations thereof. Illustrative mercapto functional silanes may include, but are not limited to, 3-mercaptopropyltriethoxysilane, 3-mercaptopropyltrimethoxysilane, 11-mercaptoundecyltrimethoxysilane, s-(octanoyl)mercaptopropyltriethoxysilane, (mercaptomethyl)methyldiethoxysilane, 3-mercaptopropylmethyldimethoxysilane, mercaptopropyltrialkoxysilanes (such as mercaptopropyltrimethoxysilanes 3- Mercaptopropyltrimethoxysilane), mercaptoundecyltrimethoxysilane, (mercaptomethyl)methyldiethoxysilane, or combinations thereof.
13. The corrosion inhibitor coating composition of any of clauses 1 to 12, wherein more than one reactive silane is included in the composition and wherein a first reactive silane is different to a second reactive silane.
14. The corrosion inhibitor coating composition of any of clauses 1 to 13, wherein the at least one reactive silane is present in an amount of from about 0.01 weight % to about 15 weight %, based on a total weight of the corrosion inhibitor coating composition.
15. The corrosion inhibitor coating composition of any of clauses 1 to 14, wherein the at least one reactive silane is present in an amount of:
   (i) from about 0.01 weight %, about 0.5 weight %, about 1 weight %, about 1.5 weight %, about 2 weight %, or about 2.5 weight % to about 2.75 weight %, about 3 weight %, about 3.5 weight %, about 4 weight %, about 4.5 weight %, about 10.0 weight %, or about 20.0 weight % based on a total weight of the corrosion inhibitor coating composition; and/or
   (ii) from about 0.01 weight % to about 10.0 weight %, about 1 weight % to about 8.0 weight %, about 2.0 weight % to about 6.0 weight %, or about 5 weight %, based on a total weight of the corrosion inhibitor coating composition.
16. The corrosion inhibitor coating composition of any of clauses 1 to 15, wherein the catalyst is present in an amount of from about 0.1 weight % to about 10 weight %, based on a total weight of the corrosion inhibitor coating composition.
17. The corrosion inhibitor coating composition of any of clauses 1 to 16, wherein the catalyst is present in an amount of:
   (i) from about 0.1 weight %, about 0.5 weight %, about 1 weight %, about 1.5 weight %, about 2 weight %, about 3 weight %, about 4 weight %, or about 5 weight % to about 6 weight %, about 6.5 weight %, about 7 weight %, about 8 weight %, about 9 weight %, or about 10 weight %, based on a total weight of the corrosion inhibitor coating composition; and/or
   (ii) from about 0.1 weight % to about 5 weight %, about 0.5 weight % to about 2.5 weight %, or about 0.5 weight % to about 1.0 weight % based on a total weight of the corrosion inhibitor coating composition.
18. An article, comprising:
   a substrate;
   a corrosion inhibitor coating composition disposed on a surface of the substrate, comprising:
      2,5-dimercapto 1,3,4-thiadiazole (DMCT);
      at least one reactive silane; and
      a catalyst; and
      wherein the at least one reactive silane comprises tetraethoxysilane (TEOS), vinyltriethoxysilane (VTS), 3-glycidoxypropyltrimethoxysilane (GPTMS), or a combination thereof.
19. The article of clause 18, wherein the corrosion inhibitor coating composition does not comprise chromium.
20. The article of clause 18 or clause 19, wherein the catalyst comprises zirconium isopropoxide, acetic acid, hydrochloric acid, or combinations thereof.
21. The article of any of clauses 18 to 20, wherein the 2,5-dimercapto 1,3,4-thiadiazole (DMCT) is present in an amount of from about 0.1 % to about 5.0 % by total weight of the corrosion inhibitor coating composition.
22. The article of any of clauses 18 to 21, wherein a thickness of the corrosion inhibitor coating composition is from about 30 nm to about 10 microns.
23. The article of any of clauses 18 to 22, wherein the substrate comprises a metal, polymer, polymer composite, or combination thereof.
24. The article of any of clauses 18 to 23, wherein the substrate comprises nickel plated steel.
25. The article of any of clauses 18 to 24, where no adhesive or primer is present between the substrate and the corrosion inhibitor coating composition.
26. The article of any of clauses 18 to 25, wherein the article is a component or part of an aerospace vehicle or a marine vehicle.
27. A method of providing a corrosion inhibitor coating, comprising:
   forming a corrosion inhibitor coating composition comprising a 2,5-dimercapto 1,3,4-thiadiazole (DMCT), at least one reactive silane, a catalyst, and a solvent;
   applying the corrosion inhibitor coating composition to a surface of a substrate; and
   exposing the corrosion inhibitor coating composition to a curing temperature.
28. The method of preparing a corrosion inhibitor coating composition of clause 27, wherein:
   a thickness of the corrosion inhibitor coating composition is from about 100 nm to about 10 microns; and
   the curing temperature is from about 15°C to about 150°C.

## Claims

1. A corrosion inhibitor coating composition (128), comprising:
a corrosion inhibitor comprising 2,5-dimercapto 1,3,4-thiadiazole (DMCT);
at least one reactive silane; and
a catalyst.

2. The corrosion inhibitor coating composition (128) of claim 1, wherein the at least one reactive silane comprises:
(i) tetraethoxysilane (TEOS); and/or
(ii) vinyltriethoxysilane (VTS), 3-glycidoxypropyltrimethoxysilane (GPTMS), methyltrimethoxysilane (MTMS), or a combination thereof.

3. The corrosion inhibitor coating composition (128) of claim 1 or claim 2, wherein the catalyst comprises:
(i) zirconium isopropoxide; and/or
(ii) acetic acid.

4. The corrosion inhibitor coating composition (128) of any of claims 1 to 3, wherein the at least one reactive silane comprises a first reactive silane and a second reactive silane, and wherein a weight ratio of the first reactive silane to the second reactive silane is from about 0.5:1 to about 3:1.

5. The corrosion inhibitor coating composition (128) of any of claims 1 to 4, wherein the corrosion inhibitor further comprises a thiadiazole, a benzotriazole, an imidazole, or a combination thereof.

6. An article, comprising:
a substrate (130, 136);
a corrosion inhibitor coating composition (128) disposed on a surface of the substrate (130, 136), comprising:
2,5-dimercapto 1,3,4-thiadiazole (DMCT);
at least one reactive silane; and
a catalyst; and
wherein the at least one reactive silane comprises tetraethoxysilane (TEOS), vinyltriethoxysilane (VTS), 3-glycidoxypropyltrimethoxysilane (GPTMS), or a combination thereof.

7. The corrosion inhibitor coating composition (128) of any of claims 1 to 5 or the article of claim 6, wherein the corrosion inhibitor coating composition (128) does not comprise chromium.

8. The article of claim 6 or claim 7, wherein the catalyst comprises zirconium isopropoxide, acetic acid, hydrochloric acid, or combinations thereof.

9. The corrosion inhibitor coating composition (128) of any of claims 1 to 5 or the article of any of claims 6 to 8, wherein the 2,5-dimercapto 1,3,4-thiadiazole (DMCT) is present in an amount of from about 0.1 % to about 5.0 % by total weight of the corrosion inhibitor coating composition (128).

10. The article of any of claims 6 to 9, wherein a thickness of the corrosion inhibitor coating composition (128) is from about 30 nm to about 10 microns.

11. The article of any of claims 6 to 10, wherein the substrate (130, 136) comprises:
(i) a metal, polymer, polymer composite, or combination thereof; and/or
(ii) nickel plated steel.

12. The article of any of claims 6 to 11, where no adhesive or primer is present between the substrate (130, 136) and the corrosion inhibitor coating composition (128).

13. The article of any of claims 6 to 12, wherein the article is a component or part of an aerospace vehicle (100) or a marine vehicle (100).

14. A method of providing a corrosion inhibitor coating, comprising:
forming a corrosion inhibitor coating composition (128) comprising a 2,5-dimercapto 1,3,4-thiadiazole (DMCT), at least one reactive silane, a catalyst, and a solvent;
applying the corrosion inhibitor coating composition (128) to a surface of a substrate (130, 136); and
exposing the corrosion inhibitor coating composition (128) to a curing temperature.

15. The method of preparing a corrosion inhibitor coating composition (128) of claim 14, wherein:
a thickness of the corrosion inhibitor coating composition (128) is from about 100 nm to about 10 microns; and
the curing temperature is from about 15°C to about 150°C.
